# EUROPÄISCHE PATENTSCHRIFT

(11) **EP 4 232 777 B1**
(45) Veröffentlichungstag und Bekanntmachung des Hinweises auf die Patenterteilung: **27.08.2025**
(21) Anmeldenummer: 21777712.7
(22) Anmeldetag: 15.09.2021
(51) Int. Cl.: G01B 11/24, B25J 19/02, G05B 19/401, G05B 19/18

(54) **VERFAHREN ZUR HERSTELLUNG EINES GEWINDES AN WENIGSTENS EINEM ENDE WENIGSTENS EINES METALLROHRES SOWIE GEWINDESCHNEIDANLAGE**
METHOD FOR THE PRODUCTION OF A THREAD AT AT LEAST ONE END OF AT LEAST ONE METAL PIPE, AND THREAD CUTTING INSTALLATION
PROCÉDÉ DE FABRICATION D'UN FILETAGE À AU MOINS UNE EXTRÉMITÉ D'AU MOINS UN TUBE MÉTALLIQUE ET INSTALLATION DE FILETAGE

(30) Priorität: 22.10.2020 DE 102020213347; 08.03.2021 DE 102021202211
(43) Veröffentlichungstag der Anmeldung: 30.08.2023
(73) Patentinhaber: SMS group GmbH, 41069 Mönchengladbach (DE)
(72) Erfinder: SCHMITZ, Jochen, 41849 Wassenberg (DE); D'HONE, Frank, 51145 Köln (DE); KÜPPERS, Tim, 41334 Nettetal (DE); DÄHNDEL, Helge, 41061 Mönchengladbach (DE)
(74) Vertreter: Kross, Ulrich
(86) Internationale Anmeldenummer: PCT/EP2021/075267
(87) Internationale Veröffentlichungsnummer: WO 2022/083945

(56) Entgegenhaltungen:
- EP-A1- 2 767 799
- EP-A1- 3 465 079
- EP-B1- 2 392 896
- CN-A- 103 235 553
- DE-B4- 102009 014 766
- US-A- 5 521 707
- US-A1- 2019 101 889

## Beschreibung

Die Erfindung betrifft ein Verfahren zur Herstellung eines Gewindes an wenigstens einem Ende wenigstens eines Metallrohres durch spanende Bearbeitung des Metallrohres in wenigstens einer CNC gesteuerten Werkzeugmaschine, umfassend eine optische Vermessung des Gewindes während des Gewindeschneidvorgangs und/oder im Anschluss an den Gewindeschneidvorgang.

Die Erfindung betrifft weiterhin eine Gewindeschneidanlage zur Herstellung von Gewinden an den Enden von Metallrohren zur Durchführung des Verfahrens.

An die Gewinde von Rohren, die für den Transport von unter Druck stehenden Fluiden dienen, wie beispielsweise Erdgas oder Erdöl, und die druckfest gas- und flüssigkeitsdicht miteinander verschraubt werden, sind hohe Anforderungen an die Dichtigkeit zu stellen. Bei solchen OCTG-Rohren (OCTG= Oil Country Tubular Goods) als Futterrohre oder Steigrohre für Erdöl- oder Erdgas Explorationsbohrungen oder Erdgas oder Erdöl Förderleitungen finden üblicherweise konische Gewinde mit hinterschnittenen Gewindeflanken Anwendungen. An die Gewinde schließt sich in der Regel stirnseitig des Rohres eine Dichtlippe an. Sowohl das Gewinde als auch die Dichtlippe müssen höchsten Präzisionsanforderungen genügen. Im Stand der Technik ist es grundsätzlich bekannt, die Gewinde zur Qualitätskontrolle der Rohre optisch zu vermessen.

Ein Verfahren sowie eine Vorrichtung zur optischen Vermessung des Außengewinde-Profils von Rohren ist beispielsweise aus der WO 2019/09371 A1 bekannt. Die Vorrichtung umfasst eine Auflage für das zu vermessende Rohr und eine optische Vermessungseinheit mit wenigstens einer Messvorrichtung, die eine Lichtquelle und eine im Strahlengang der Lichtquelle angeordnete Kamera zur Aufnahme eines Schattenbildes des Außengewinde-Profils umfasst, wobei die optische Vermessungseinheit starr auf einem Tragelement angeordnet ist, das um drei Raumachsen verschwenkbar gehalten ist, wobei weiterhin die optische Vermessungseinheit wenigstens zwei Messvorrichtungen aufweist, deren Strahlengänge einander kreuzen. Das Verfahren umfasst das Anordnen der zu vermessenden Rohre auf einer Auflage, sodass die Raumachse quer zu einer Messebene der Vermessungseinheit verläuft und das Außengewinde im Strahlengang zwischen den Lichtquellen und den zugeordneten Kameras angeordnet ist, das Ausrichten der Vermessungseinheit derart, dass die Messebene einen rechten Winkel mit der Raumachse einschließt, das Aufnehmen von Schattenbildern des Außengewindes mittels der Kamera wenigstens einer Messvorrichtung sowie das Auswerten der Schattenbilder.

Eine andere Vorrichtung zur Messung eines Gewindes ist beispielsweise aus der EP 3 465 079 B1 bekannt. Die Vorrichtung umfasst einen Halter zur lösbaren Halterung eines Rohres, wobei das Gewinde an einem Ende des Rohres ausgeformt ist, eine erste optische Messstrecke mit einem ersten optischen Sensor, wobei die erste optische Messstrecke an einem Manipulator der Vorrichtung angebracht ist, der eingerichtet ist, die erste Messstrecke relativ zu dem Rohr zu bewegen, und wobei die erste optische Messstrecke um eine erste Stellachse relativ zu einer Gewindeachse des Gewindes einstellbar ist, wobei an den Manipulator eine zweite optische Messstrecke der Vorrichtung mit einem zweiten optischen Sensor angeordnet ist, wobei die optischen Messstrecken insgesamt einen Messkanal zur gleichzeitigen Vermessung von gegenüberliegenden Seiten des Gewindes ausbilden. Die Vorrichtung zeichnet sich insbesondere dadurch aus, dass der Messkanal mittels des Manipulators um zumindest eine zweite Stellachse relativ zu der Gewindeachse kippbar ist, sodass der Messkanal innerhalb eines Raumwinkelintervalls frei ausrichtbar ist.

Weiterer Stand der Technik ist aus den Dokumenten EP 2 302 869 B1, EP 2 767 799 A1, US 5 521 707 A, US 2019/101889 A1, CN 103 235 553 A und DE 10 2009 014766 B4 bekannt.

Die mit den bekannten Vorrichtungen und Verfahren gewonnenen Messdaten werden in der Regel stichprobenartig erfasst, um hieraus Erkenntnisse im Hinblick auf den Verschleiß der Werkzeuge für das Schneiden der Gewinde abzuleiten. Auch werden die Messergebnisse zur Aufzeichnung von Qualitätssicherungsdaten verwendet.

Der Erfindung liegt die Aufgabe zugrunde, ein Verfahren und eine Vorrichtung zur Herstellung von Gewinden an Metallrohren bereitzustellen, die hinsichtlich der Rückkopplung von Messdaten aus einer Qualitätsüberprüfung verbessert sind.

Die Aufgabe wird gelöst durch ein Verfahren mit den Merkmalen des Anspruchs 1 sowie durch eine Gewindeschneidanlage mit den Merkmalen des Anspruchs 9. Vorteilhafte Ausgestaltungen der Erfindung ergeben sich aus den Unteransprüchen.

Ein Gesichtspunkt der Erfindung betrifft ein Verfahren zur Herstellung eines Gewindes an wenigstens einem Ende wenigstens eines Metallrohres durch spanende Bearbeitung des Metallrohres in wenigstens einer CNC gesteuerten Werkzeugmaschine, umfassend eine optische Vermessung des Gewindes während des Gewindeschneidvorgangs und/oder im Anschluss an den Gewindeschneidvorgang sowie die elektronische Erfassung und Auswertung der Messdaten des Gewindeprofils und/oder einer Dichtlippe des Gewindes und die Ableitung von Steuerbefehlen für eine Steuerung der Werkzeugmaschine aus den Messdaten unter Verwendung wenigstens einer mit der Werkzeugmaschine gekoppelten Regeleinrichtung.

Das Verfahren gemäß der Erfindung nutzt einen geschlossenen Regelkreis zwischen der Bearbeitung des Metallrohres und der Gewindevermessung, wobei in vorteilhafter Art und Weise eine direkte Auswertung und Ableitung von Steuerbefehlen für die Werkzeugmaschine erfolgt, auf der das Gewinde geschnitten wird oder wurde.

Die beispielsweise in einer Maschinensteuerung vorgesehene Regeleinrichtung zur Auswertung und Ableitung von Steuerbefehlen umfasst wenigstens einen selbstlernenden Algorithmus zur Ableitung der Steuerbefehle.

Zweckmäßigerweise wird als Gewinde ein konisches Außengewinde geschnitten, welches mit einem komplementären Innengewinde eines weiteren Metallrohres eine druck- und/oder flüssigkeitsdichte Verbindung bilden soll.

Die optische Vermessung des Gewindes wird mittels wenigstens eines an einem Manipulator geführten Messkopfs mit wenigstens einer optischen Messstrecke durchgeführt.

Der Manipulator ist als Industrieroboter mit einem Gelenkarm ausgebildet, der mehrere Freiheitsgrade aufweist. An einem freien Ende des Manipulators ist der Messkopf so angeordnet, dass dieser in wenigstens drei Raumachsen frei im Raum ausrichtbar ist. Der Messkopf, kann an einem Träger angeordnet sein und an dem Träger relativ zu diesem in mehreren Freiheitsgraden einstellbar geführt sein. Der Messkopf kann beispielsweise relativ zu dem Träger linear verstellbar und/oder um wenigstens eine Raumachse kippbar ausgebildet sein.

Eine optische Messstrecke im Sinne der vorliegenden Erfindung kann ein optisches Erfassungssystem mit einem optischen Sensor sein, mittels dessen ein Objekt optisch vermessen werden kann. Die optische Messstrecke kann wenigstens eine Lichtquelle und eine Kamera und/oder einen Lichtschnittsensor umfassen. Die optische Messstrecke kann beispielsweise eine telezentrische Optik umfassen, mit welcher ein objektseitig paralleler Strahlengang auf einem optischen Sensor abgebildet wird. Bei einer bevorzugten Variante des Verfahrens wird wenigstens ein Messkopf verwendet, der zur Vermessung konischer Gewinde mit hinterschnittenen Gewindeflanken eingerichtet ist. Ein solcher Messkopf kann beispielsweise eine erste und eine zweite optische Messstrecke umfassen, die insgesamt einen Messkanal zur gleichzeitigen Vermessung von gegenüberliegenden Seiten des Gewindes ausbilden. Ein solcher Messkopf ist beispielsweise in der EP 3 465 079 B1 beschrieben.

Bei einer weiterhin bevorzugten Variante des Verfahrens gemäß der Erfindung ist vorgesehen, dass die optische Vermessung des Gewindes im Anschluss an den Gewindeschneidvorgang erfolgt, vorzugsweise in einer Produktionslinie, die für die serielle Bearbeitung einer Vielzahl von Metallrohren eingerichtet ist, vorzugsweise mehrere Takte nach dem Gewindeschneidvorgang.

Die Vermessung wird in einer hierzu vorgesehenen Vermessungsstation durchgeführt, die in einer Prozesslinie hinter der Werkzeugmaschine angeordnet ist. Beispielsweise kann vorgesehen sein, die Vermessung an dem zweiten oder dritten Metallrohr hinter der Werkzeugmaschine in der Prozesslinie zu beginnen, sodass etwaige Korrekturen an der Werkzeugmaschine, die mit entsprechenden Steuerbefehlen ausgelöst werden, mit der Produktion einer verhältnismäßig geringen Anzahl von Ausschussrohren einhergeht.

Die Vermessungsstation ist so eingerichtet, dass das zu vermessende Metallrohr dort in einer definierten Lage festgelegt werden kann. Dies kann beispielsweise durch entsprechende Anschläge oder Aufnahmen in einer Unterlage bewerkstelligt werden.

Das erfindungsgemäße Verfahren kann alternativ auch vorsehen, die optische Vermessung des Gewindes unmittelbar bei der Durchführung des Gewindeschneidvorgangs (in situ) durchzuführen, wobei dies mit dem Nachteil einhergeht, dass bei der Detektion von Qualitätsmängeln des Gewindes der getaktete Herstellungsvorgang unterbrochen werden muss.

Bei einer zweckmäßigen und bevorzugten Variante des Verfahrens gemäß der Erfindung ist vorgesehen, dass die Steuerbefehle aus einer Gruppe von Steuerbefehlen ausgewählt werden, die eine Positionskorrektur wenigstens eines Werkzeugs relativ zu dem zu bearbeitenden Metallrohr bei falschen Einstellparametern oder zur Verschleißkompensation, den verschleißbedingten Wechsel wenigstens eines Werkzeugs, die Auswahl wenigstens eines Werkzeugs wegen vorgegebener geometrischer Anforderungen an das Gewindeprofil, die Verstellung der Drehzahl und/oder des Drehmoments eines Spannfutters der Werkzeugmaschine und die Veränderung der Taktzeit der Werkzeugmaschine umfassen.

Steuerbefehle können insbesondere folgende sein:
- Korrektur der Werkzeuge aufgrund geometrischer Anordnung von Schneidplatten des Werkzeugs, beispielsweise wenn nach dem Werkzeugwechsel eine Stufe erkannt wird,
- Korrektur der Werkzeuge aufgrund von Verschleiß, beispielsweise wenn die Schneidplatten der Werkzeuge anfangen zu schmieren,
- Korrektur der Werkzeuge aufgrund von anderen äußeren Einflüssen, beispielsweise bei einer Veränderung der Umgebungstemperatur,
- Korrektur der Werkzeuge wegen einer Veränderung der Wandstärke des zu bearbeitenden Rohres oder wegen Verwendung eines anderen Materials bzw. einer anderen Materialzusammensetzung.

Steuerbefehle können insbesondere aus den folgenden aus den Messdaten abgeleiteten Informationen erzeugt bzw. abgeleitet werden:
- Verschleißerkennung der Werkzeuge und ein daraus abgeleiteter Aufruf zu einen Werkzeugwechsel,
- Verschleißerkennung der Werkzeuge zur Standzeitoptimierung, beispielsweise zur Abstimmung von Schnittgeschwindigkeit, Schneidengeometrie und Werkzeugvorschub,
- Verschleißerkennung der Werkzeuge zur Erzeugung von Standzeitprognosen.

Durch eine entsprechende Auswertung der Messdaten kann die Produktivität des Bearbeitungsvorgangs bzw. des Gewindeschneidvorgangs durch Taktzeitoptimierung und durch Verbesserung des Materialflusses erhöht werden. Das Verfahren gemäß der Erfindung ermöglicht eine frühzeitige Problemerkennung. Die gesammelten Daten können weiterhin zur Qualitätsauswertung und-Dokumentation sowie für nachgeschaltete Prozesse verwendet werden und mit den Daten der Werkzeugmaschine beispielsweise mittels entsprechender Regelalgorithmen oder künstlicher Intelligenz korreliert werden. Nachgeschaltete Prozesse und Korrelationen können sein:
- Erkennung von Verschmutzung des Metallrohres und Unterscheidung zu Bearbeitungsfehlern,
- Korrelation der Messdaten mit vorher gesammelten Daten, um beispielsweise zu erfassen, woher Spannungen im Metallrohr resultieren, welche zu einer Unrundheit des Metallrohres nach dem Gewindeschneidvorgang führen. Daraus kann beispielsweise eine Verbesserung der Abschreckstrategie abgeleitet werden,
- Erhöhen der Qualität durch Vergleich der Messergebnisse mit dem an der Werkzeugeinspannung entstehenden Drehmoment,
- Erhöhung der Qualität durch Vergleich der Messergebnisse bzw. Messdaten mit den an einer Richtmaschine auftretenden Richtkräften.

Der Gewindeschneidvorgang wird vorzugsweise an dem in einem rotierenden Spannfutter der Werkzeugmaschine eingespannten Metallrohr mittels wenigstens eines relativ zu dem Metallrohr ortsfest angeordneten Werkzeug durchgeführt.

Das Verfahren umfasst vorzugsweise wenigstens einen Verfahrensschritt, während dessen eine Kalibrierung des Messkopfs mittels wenigstens eines in einer Vermessungsstation angeordneten Referenzbauteils vorgesehen ist. Das Referenzbauteil kann beispielsweise als Kaliber für den Rohrdurchmesser des Metallrohres vorgesehen sein.

Weiterhin kann vorgesehen sein, das zu schneidende Gewinde in einer Software zu konfigurieren und die Softwaredaten als Soll-Daten mit den Messdaten abzugleichen. Hierzu kann beispielsweise zusätzlich vorgesehen sein, die Daten eines CAD Systems für die Ableitung von Steuerbefehlen zu verwenden.

Bei einer zweckmäßigen Variante des Verfahrens gemäß der Erfindung ist vorgesehen, dass die Messdaten in einer Qualitätsdatenbank mit einer eindeutigen Kennzeichnung und Zuordnung des betreffenden Metallrohres gespeichert werden, sodass die Qualitätsdaten des entsprechend gekennzeichneten Metallrohres jederzeit abrufbar sind.

Das Verfahren zeichnet sich durch die Verfahrensschritte Festlegen des zu vermessenden Metallrohres in einer definierten Messlage innerhalb einer Vermessungsstation, Positionieren des Messkopfs relativ zu dem Metallrohr mit einem System zur Lageerkennung des Messkopfs, Ausrichten der wenigstens einen Messstrecke bezüglich einer Rohrachse und Abfahren des Gewindeprofils und/oder der Dichtlippe des Metallrohres aus. Das Abfahren des Gewindeprofils kann beispielsweise durch eine Linearbewegung und/oder eine Drehbewegung des Messkopfs erfolgen.

Nach einem weiteren Gesichtspunkt der Erfindung wird eine Gewindeschneidanlage zur Herstellung von Gewinden an den Enden von Metallrohren vorgeschlagen, die zur Durchführung des vorstehend beschriebenen Verfahrens bestimmt und geeignet ist. Die Gewindeschneidanlage gemäß der Erfindung umfasst wenigstens eine CNC Werkzeugmaschine zur spanenden Bearbeitung des mit Gewinde zu versehenden Metallrohres, eine Steuereinrichtung zur Umsetzung von Steuerbefehlen an die Werkzeugmaschine sowie wenigstens eine Einrichtung zur optischen Vermessung des geschnittenen Gewindes, Mittel zur elektronischen Erfassung und Speicherung der Messdaten der Gewindevermessung sowie wenigstens eine Regeleinrichtung zur Ableitung von Steuerbefehlen aus den Messdaten der Gewindevermessung, wobei die Einrichtung zur optischen Erfassung und Speicherung der Messdaten mit der Steuereinrichtung der Werkzeugmaschine gekoppelt ist. Die erfindungsgemäße Gewindeschneidanlage ist in Anspruch 9 definiert.

Die Werkzeugmaschine kann als Drehmaschine, Dreh-Fräs-Zentrum, Gewindeschneidmaschine oder Muffenschneidmaschine ausgebildet sein.

Zweckmäßigerweise umfasst die Werkstoffmaschine wenigstens ein drehbares Spannfutter zur Einspannung des Metallrohres sowie wenigstens einen relativ zu dem Spannfutter festlegbaren und positionierbaren Werkzeughalter mit wenigstens einem Werkzeug. Beispielsweise kann die Werkzeugmaschine wenigstens einen, vorzugsweise mehrere als Revolverköpfe ausgebildete Werkzeughalter mit einer Vielzahl verschiedener Werkzeuge umfassen.

Die Gewindeschneidanlage gemäß der Erfindung kann wenigstens eine Bearbeitungsstation, und wenigstens eine Vermessungsstation umfassen, die in einer Prozesslinie hintereinander angeordnet sind, wobei die Bearbeitungsstation die Werkzeugmaschine und die Vermessungsstation wenigstens eine Einrichtung zur optischen Vermessung der geschnittenen Gewinde umfasst.

Die Gewindeschneidanlage kann als Einrichtung zur optischen Vermessung wenigstens einen Messkopf mit wenigstens einer optischen Messstrecke umfassen, der an einem Manipulator angebracht ist und der dazu eingerichtet ist, den Messkopf relativ zu dem Metallrohr zwecks Vermessung des Gewindeprofils und/oder einer Dichtlippe des Gewindes zu bewegen.

Der Messkopf kann Mittel zur Reinigung des zu vermessenden Gewindes umfassen, beispielsweise in Form wenigstens einer Bürste, eines Bürstensystems oder wenigstens einer pneumatischen oder hydraulischen Reinigungseinrichtung. Auf diese Art und Weise wird gegebenenfalls vor einer Vermessung sichergestellt, dass etwaige Verunreinigungen des Gewindes, beispielsweise noch an dem Gewinde anhaftende Späne, entfernt werden.

Eine pneumatische Reinigungsvorrichtung kann beispielsweise wenigstens einen Druckluftring umfassen, der das Gewinde in einer Reinigungsstufe umschließt. Es können mehrere mit Abstand zueinander angeordnete Druckluftringe oder alternativ Druckluftbögen mit unterschiedlichen Durchmessern vorgesehen sein, um entweder ein konisches Gewinde reinigen zu können oder um eine Anpassung an verschiedene Gewindedurchmesser bewerkstelligen zu können.

Die Reinigungsvorrichtung kann dafür eingerichtet sein, dass das zu reinigende Gewinde relativ zu der Reinigungsvorrichtung gedreht wird oder dass die Reinigungsvorrichtung um das zu reinigende Gewinde gedreht wird und/oder linear dazu bewegt wird.

Beispielsweise kann die Reinigungsvorrichtung halbkreisförmige Bögen mit einwärts gerichteten Druckluftdüsen umfassen, von denen beispielsweise mehrere hintereinander und/oder auf gleicher Höhe bezogen auf die Längsachse des Gewindes oder des Metallrohres angeordnet sind, zwischen denen das Gewinde entlang der Längsachse bewegt und gegebenenfalls gleichzeitig gedreht wird.

Die Erfindung wird nachstehend anhand eines Ausführungsbeispiels unter Bezugnahme auf die beigefügten Zeichnungen erläutert:

Es zeigen:
- Figur 1: eine schematische Ansicht des Layouts einer Gewindeschneidanlage gemäß der Erfindung,
- Figur 2: eine schematische perspektivische Darstellung einer Vermessungsstation der Gewindeschneidanlage gemäß der Erfindung,
- Figur 3: eine perspektivische Darstellung des Messkopfs gemäß der Erfindung bei der Gewindevermessung,
- Figur 4a: eine Darstellung des optischen Messprinzips gemäß der Erfindung als Ansicht in Richtung der Längsachse des Metallrohres,
- Figur 4b: eine Seitenansicht des optischen Messprinzips mit einem zusätzlichen Lichtschnittsensor zur Vermessung hinterschnittener Gewindeflanken,
- Figur 4c: eine schematische Darstellung des Messprinzips bei der Vermessung von hinterschnittenen Gewindeflanken und
- Figur 5: eine Darstellung des Außengewindeprofils des Metallrohres.

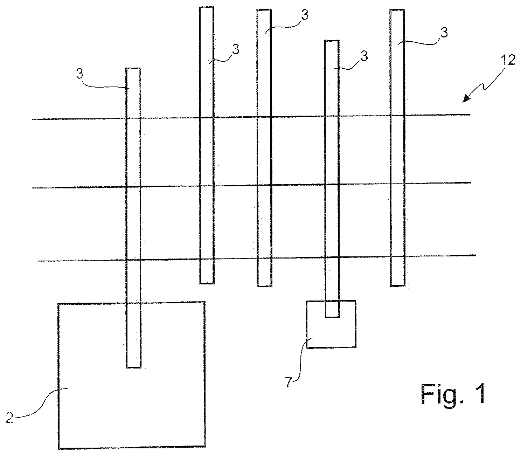

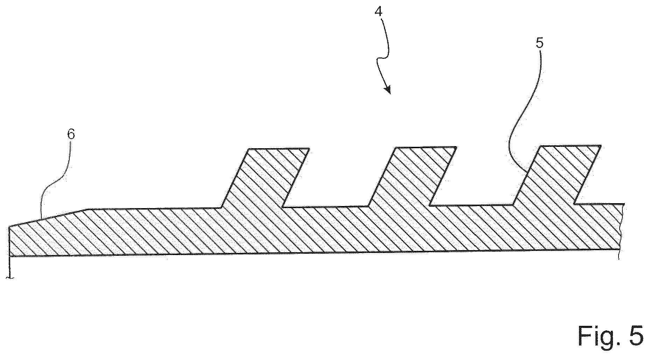

Figur 1 zeigt das Layout einer Gewindeschneidanlage 1 gemäß der Erfindung. Die Gewindeschneidanlage 1 umfasst eine Werkzeugmaschine 2 zur spanenden Bearbeitung eines Endes eines Metallrohres 3, welches beispielsweise als Futterrohr oder Steigrohr für eine Erdgas- oder Erdöl Produktionsbohrung ausgebildet sein kann. Solche Metallrohre 3 werden zu druckfesten sowie flüssigkeits- und gasdichten Verbindungen miteinander verschraubt, wobei die Verbindung zwischen einem Steckende mit einem Außengewinde 4 und einem Muffenende mit einem Innengewinde hergestellt wird. Das Verfahren gemäß der Erfindung betrifft vorzugsweise die Herstellung des Außengewindes 4 solcher Metallrohre. Das Metallrohr 3 wird in der Werkzeugmaschine 2 mit einem konischen Außengewinde 4 versehen, welches gegebenenfalls hinterschnittene Gewindeflanken 5 und eine stirnseitige Dichtlippe 6 aufweist. Figur 5 zeigt das Außengewindeprofil eines konischen Außengewindes 4 mit hinterschnittenen Gewindeflanken 5 sowie einer stirnseitigen Dichtlippe 6.

Das zu bearbeitende Metallrohr 3 wird zunächst in ein drehbares Spannfutter der Werkzeugmaschine 2 eingespannt. Die Werkzeugmaschine 2 umfasst zur Herstellung des Gewindes vorzugsweise zwei mit Werkzeugen bestückte Werkzeugrevolver, die jeweils relativ zu dem mit dem Spannfutter gedrehten bzw. mit Bearbeitungsgeschwindigkeit rotierten Metallrohr angeordnet werden, wobei die Werkzeuge jeweils spanabnehmend im Eingriff mit dem Ende des Metallrohres geführt werden. Das gezeigte Gewindeprofil ist das in der Steuerung der Werkzeugmaschine 2 hinterlegte Soll-Profil. Das Verfahren gemäß der Erfindung umfasst zunächst die spanende Bearbeitung von Metallrohren 3 in einer Prozesslinie sowie eine in der Prozesslinie vorgesehene optische Vermessung der Außengewinde 4 der Metallrohre 3. Wie dies aus dem in Figur 1 dargestellten Anlagenlayout ersichtlich ist, ist in der Prozesslinie stromabwärts der Werkzeugmaschine, die als CNC gesteuerte Werkzeugmaschine 2 ausgebildet ist, eine Vermessungsstation 7 angeordnet.

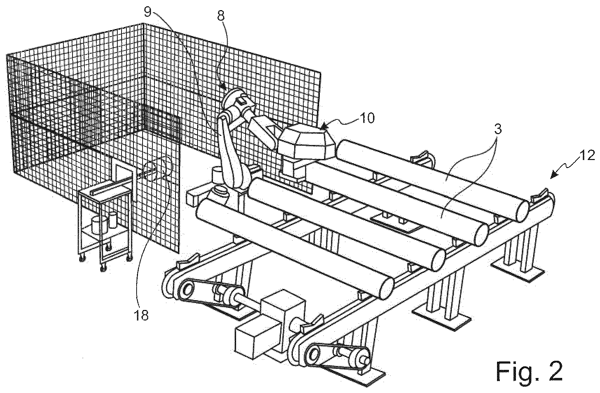

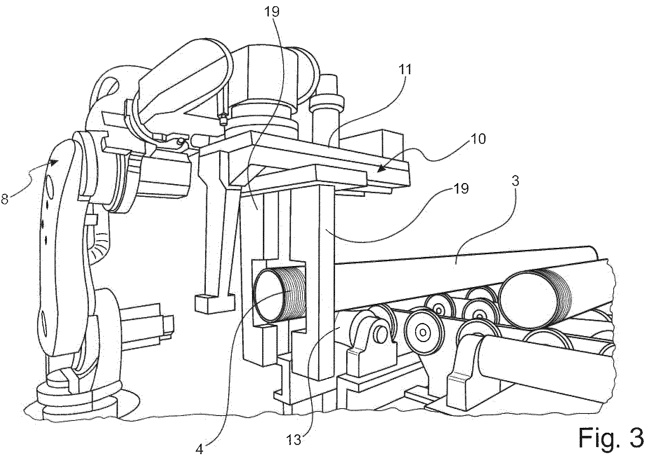

Die Vermessungsstation 7 ist in Figur 2 schematisch dargestellt. Diese umfasst einen Roboter 8, mit einem dreh- und schwenkbaren Roboterarm 9 mit vorzugsweise fünf Freiheitsgraden, an dessen freiem Ende ein Messkopf 10 angeordnet ist. Der Messkopf 10 umfasst einen Träger 11 mit an diesem vorgesehenen optischen Messmitteln zur optischen Vermessung der Außengewinde 4. Die Metallrohre 3 werden nach dem Gewindeschneidvorgang über einen Rollgang 12 der Vermessungsstation 7 zugeführt und in einer definierten Messlage festgelegt. Die Messlage kann beispielsweise, wie dies in Figur 3 schematisch dargestellt ist, durch eine mittig eingeschnürte Positionsrolle (Diabolo Rolle) 13 definiert werden, deren Einschnürung die Lage des Metallrohres 3 festlegt. Alternativ kann ein seitlicher Anschlag zur Lagefixierung des zu vermessenden Metallrohres 3 vorgesehen sein. In der Messlage des Metallrohres 3 wird der Träger 11 des Messkopfs 10, gegebenenfalls nach einer Durchmesserkalibrierung des Metallrohres 3, in eine Messtellung verfahren, in der der Messkopf 10 relativ zu dem Metallrohr 3 ausgerichtet wird.

Die Durchmesserkalibrierung des Messkopfs 10 dient dazu, die Messmittel des Messkopfs 10 relativ zu dem Träger 11 so zu positionieren, dass das Metallrohr 3 zwischen den Messmitteln angeordnet wird, dass der Messkopf 10 bei der Vorausrichtung nicht mit dem Metallrohr 3 kollidiert. Hierzu ist in der Vermessungsstation 7 ein Kaliber 18 als Referenzbauteil angeordnet, anhand dessen der Messkopf 10 vor Durchführung des Vermessungsvorgangs kalibriert werden kann. Zur Positionierung bzw. Vorausrichtung des Messkopfs 10 kann wenigstens ein Positionssensor, beispielsweise als Laserschnittsensor, vorgesehen sein, mit dem die Position des Messkopfs 10 relativ zu dem in der Messlage festgelegten Metallrohr 3 überprüft und gegebenenfalls korrigiert werden kann. Das Verfahren kann sowohl eine Vorausrichtung des Messkopfs 10 durch eine entsprechende Ansteuerung des Roboterarms 9 als auch eine Feinausrichtung des Messkopfs 10 durch Verstellung des Messkopfs 10 relativ zu dem Träger 11 umfassen. Die Feinausrichtung umfasst das Ausrichten wenigstens einer Messstrecke 16 bezüglich einer Rohrachse des Metallrohres 3.

Wie vorstehend bereits erwähnt, ist der Messkopf 10 relativ zu dem Träger linear verfahrbar sowie vorzugsweise um wenigstens eine Achse schwenkbar, wobei erfindungsgemäß der Manipulator als Industrieroboter mit einem Gelenkarm ausgebildet ist, der mehrere Freiheitsgrade aufweist und der Messkopf an einem freien Ende des Manipulators angeordnet ist und in wenigstens drei Raumachsen frei im Raum ausrichtbar ist. Die Linearverstellung kann beispielsweise mittels wenigstens einer angetriebenen Kugelumlaufspindel oder mittels wenigstens eines Triebstocks bewerkstelligt werden. Die Messmittel sind jeweils in Schenkeln 19 des Messkopfs 10 angeordnet. Die Schenkel 19 des Messkopfs 10 sind in ihrem Abstand zueinander linear verstellbar. Die Schenkel 19 des Messkopfs 10 bilden eine U - förmige Umschließung des Metallrohres 3. Diese können beide unabhängig und relativ zueinander verstellbar ausgebildet sein. Bei dem beschriebenen Ausführungsbeispiel ist vorgesehen, dass ein Schenkel 19 des Messkopfs 10 ortsfest angeordnet ist, wohingegen der andere Schenkel 19 des Messkopfs 10 relativ zu dem gegenüberliegenden Schenkel 19 des Messkopfs 10 verstellbar ist.

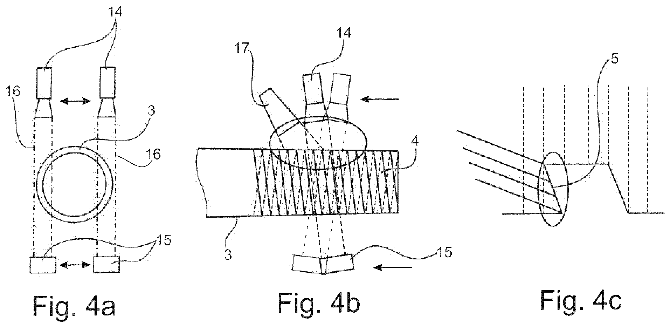

In jedem der Schenkel 19 des Messkopfs 10 sind als Messmittel eine Kamera 14 mit einer telezentrischen Optik und eine der Kamera gegenüberliegend positionierte Lichtquelle 15 vorgesehen, wie dies beispielsweise in Figur 4a dargestellt ist. Die Kamera 14 und die Lichtquelle 15 sind jeweils mit Abstand zueinander gegenüberliegend, eine Messstrecke 16 bildend, angeordnet, wobei die Messstrecke 16 als gerade Messstrecke 16 ausgebildet sein kann. Der Strahlengang zwischen der Kamera 14 und der Lichtquelle 15 kann alternativ über Spiegel umgelenkt sein.

Das Messprinzip wird nachstehend unter Bezugnahme auf die Figuren 4a, 4b und 4c erläutert. Jede Messstrecke 16 erfasst einen Teil des Außengewindeprofils an einer Seite des Metallrohres 3, wobei die von einer Lichtquelle 15 erzeugte Projektion eines Teils des Außengewindes 4 mittels jeweils einer telezentrischen Optik auf einem in einer Kamera 14 angeordneten lichtempfindlichen Sensor, beispielsweise einen CMOS oder einen CCD Sensor, auftritt. Durch die Verwendung von telezentrischen Objektiven an den Kameras 14 wird sichergestellt, dass die von dem jeweiligen Sensor erfasste Projektion unverzerrt und maßstabsgetreu aufgezeichnet werden kann. Die so erfassten Messdaten des Außengewindes 4 werden aufgezeichnet und mit dem Soll - Profil des Außengewindes 4 verglichen. Die beiden Messstrecken 16 können einen einzigen Messkanal bilden.

Bei einer Variante des Messkopfs 10 gemäß der Erfindung ist vorgesehen, dass dieser wenigstens einen Lichtschnittsensor 17 umfasst, der als Laserschnittsensor ausgebildet ist und welcher auf eine Gewindeflanke 5 des Außengewindes 4 ausgerichtet ist. Die Vermessung der Gewindeflanken 5 ist in Figur 4c veranschaulicht.

In einer nicht dargestellten Regeleinrichtung erfolgt eine Auswertung der Messdaten des Außengewindeprofils und/oder der Dichtlippe 6 sowie eine Ableitung von Steuerbefehlen für eine Steuerung der Werkzeugmaschine 2 bei einer Abweichung zwischen dem Soll-Profil und dem durch Messdaten belegten Ist - Profil. Das jeweilige Soll-Profil kann beispielsweise in einer Bediener Schnittstelle (HMI) aus einem Katalog von verschiedenen Gewindetypen frei wählbar sein. Der Messkopf 10 und die Steuerung der Werkzeugmaschine 2 bilden einen vorzugsweise geschlossenen Regelkreis. Steuerbefehle können beispielsweise das Nachstellen der Werkzeugpositionen, die Wahl der Werkzeuge, die Drehgeschwindigkeit und das dabei aufgebrachte Drehmoment des Spannfutters der Werkzeugmaschine 2 sowie des Metallrohres 3, die Durchführung eines Werkzeugwechsels, die Veränderung der Taktzeit der Werkzeugmaschine 2 etc. sein. Wie vorstehend bereits erwähnt, ist die Regelung als selbstlernende Regelung (KI) ausgeführt und umfasst hierzu wenigstens einen Regelalgorithmus. Die bezüglich eines Rohres ermittelten Messdaten werden erfindungsgemäß nicht nur zur Rückkopplung mit der Werkzeugmaschine 2 und zu deren Steuerung, sondern auch zur Qualitätsdaten Sicherung und Nachverfolgung verwendet.

Bei dem Verfahren gemäß der Erfindung ist vorzugsweise vorgesehen, die optische Vermessung der Außengewinde 4 in der Prozesslinie etwa drei bis vier Takte hinter dem Gewindeschneidvorgang durchzuführen.

### Bezugszeichenliste

- 1: Gewindeschneidanlage
- 2: Werkzeugmaschine
- 3: Metallrohr
- 4: Außengewinde
- 5: Gewindeflanken
- 6: Dichtlippe
- 7: Vermessungsstation
- 8: Roboter
- 9: Roboterarm
- 10: Messkopf
- 11: Träger
- 12: Rollgang
- 13: Positionsrolle
- 14: Kamera
- 15: Lichtquelle
- 16: Messstrecke
- 17: Lichtschnittsensor
- 18: Kaliber
- 19: Schenkel

## Patentansprüche

1. Verfahren zur Herstellung eines Gewindes an wenigstens einem Ende wenigstens eines Metallrohres (3) durch spanende Bearbeitung des Metallrohres (3) in wenigstens einer CNC gesteuerten Werkzeugmaschine (2), umfassend eine optische Vermessung des Gewindes während des Gewindeschneidvorgangs und/oder im Anschluss an den Gewindeschneidvorgang mittels wenigstens eines an einem Manipulator geführten Messkopfs (10) mit wenigstens einer optischen Messstrecke (16), sowie die elektronische Erfassung und Auswertung der Messdaten des Gewindeprofils und/oder einer Dichtlippe (6) des Gewindes wobei das Verfahren weiterhin die Ableitung von Steuerbefehlen für eine Steuerung der Werkzeugmaschine (2) aus den Messdaten unter Verwendung wenigstens einer mit der Werkzeugmaschine (2) gekoppelten Regeleinrichtung umfasst, mit einem geschlossenen Regelkreis zwischen der Bearbeitung des Metallrohres und der Gewindevermessung, wobei eine direkte Auswertung und Ableitung von Steuerbefehlen für die Werkzeugmaschine erfolgt, auf der das Gewinde geschnitten wird oder wurde, wobei die Steuerbefehle aus einer Abweichung zwischen einem Soll-Profil und einem durch Messdaten belegten Ist - Profil erzeugt werden, wobei die Regeleinrichtung wenigstens einen selbstlernenden Algorithmus zur Ableitung der Steuerbefehle umfasst, wobei der Manipulator als Industrieroboter mit einem Gelenkarm ausgebildet ist, der mehrere Freiheitsgrade aufweist und der Messkopf (10) an einem freien Ende des Manipulators angeordnet ist, so dass der Messkopf (10) in wenigstens drei Raumachsen frei im Raum ausrichtbar ist, weiterhin umfassend die Verfahrensschritte, Festlegen des zu vermessenden Metallrohres (3) in einer definierten Messlage innerhalb einer Vermessungsstation, Positionieren des Messkopfs (10) relativ zu dem Metallrohr (3) mit einem System zur Lageerkennung des Messkopfs (10), Ausrichten der wenigstens einen Messstrecke (16) bezüglich einer Rohrachse und Abfahren des Gewindeprofils und/ oder der Dichtlippe (6) des Metallrohrs (3).

2. Verfahren nach Anspruch 1, **dadurch gekennzeichnet, dass** als Gewinde ein konisches Außengewinde (4) geschnitten wird, welches mit einem komplementären Innengewinde eines weiteren Metallrohres (3) eine druckfeste gas- und/oder flüssigkeitsdichte Verbindung bilden soll.

3. Verfahren nach einem der Ansprüche 1 oder 2, **dadurch gekennzeichnet, dass** der Messkopf (10) zur Vermessung konischer Gewinde mit hinterschnittenen Gewindeflanken (5) eingerichtet ist.

4. Verfahren nach einem der Ansprüche 1 bis 3, **dadurch gekennzeichnet, dass** die optische Vermessung des Gewindes im Anschluss an den Gewindeschneidvorgang erfolgt, vorzugsweise in einer Produktionslinie, die für die serielle Bearbeitung einer Vielzahl von Metallrohren (3) eingerichtet ist, mehrere Takte nach dem Gewindeschneidvorgang.

5. Verfahren nach einem der Ansprüche 1 bis 4, **dadurch gekennzeichnet, dass** die Steuerbefehle aus einer Gruppe von Steuerbefehlen ausgewählt werden, umfassend eine Positionskorrektur wenigstens eines Werkzeugs relativ zu dem zu bearbeitenden Metallrohr bei falschen Einstellparametern oder zur Verschleißkompensation, den verschleißbedingten Wechsel wenigstens eines Werkzeugs, die Auswahl wenigstens eines Werkzeugs wegen vorgegebener geometrischer Anforderungen an das Gewindeprofil, die Verstellung der Drehzahl und/oder des Drehmoments eines Spannfutters der Werkzeugmaschine (2), die Veränderung der Taktzeit der Werkzeugmaschine (2).

6. Verfahren nach einem der Ansprüche 1 bis 5, **dadurch gekennzeichnet, dass** wenigstens ein Verfahrensschritt wenigstens eine Kalibrierung des Messkopfs (10) mittels wenigstens eines in einer Vermessungsstation (7) angeordneten Referenzbauteils umfasst.

7. Verfahren nach einem der Ansprüche 1 bis 6, **dadurch gekennzeichnet, dass** das zu schneidende Gewinde in einer Software konfiguriert wird und die Konfigurationsdaten mit den Messdaten abgeglichen werden.

8. Verfahren nach einem der Ansprüche 1 bis 7, **dadurch gekennzeichnet, dass** die Messdaten in einer Qualitätsdatenbank mit einer eindeutigen Kennzeichnung und Zuordnung des betreffenden Metallrohres (3) gespeichert werden.

9. Gewindeschneidanlage zur Herstellung von Gewinden an den Enden von Metallrohren, zur Durchführung des Verfahrens nach einem der Ansprüche 1 bis 8 umfassend wenigstens eine CNC Werkzeugmaschine (2) zur spanenden Bearbeitung des mit Gewinde zu versehenden Metallrohres (3), eine Steuereinrichtung zur Umsetzung von Steuerbefehlen an die Werkzeugmaschine (2) sowie wenigstens eine Einrichtung zur optischen Vermessung des geschnittenen Gewindes, Mittel zur elektronischen Erfassung und Speicherung der Messdaten der Gewindevermessung sowie wenigstens eine Regeleinrichtung zur Ableitung der Steuerbefehle aus den Messdaten der Gewindevermessung, wobei die Regeleinrichtung wenigstens einen selbstlernenden Algorithmus zur Ableitung der Steuerbefehle umfasst, und wobei die Einrichtung zur optischen Erfassung und Speicherung der Messdaten mit der Steuereinrichtung der Werkzeugmaschine (2) gekoppelt ist, wobei als Einrichtung zur optischen Vermessung wenigstens ein an einem Manipulator geführter Messkopf (10) mit wenigstens einer optischen Messstrecke (16) vorgesehen ist, der an dem Manipulator angebracht ist und der dazu eingerichtet ist, den Messkopf (10) relativ zu dem Metallrohr (3) zwecks Vermessung des Gewindeprofils und/oder eine Dichtlippe (6) des Gewindes zu bewegen, wobei der Manipulator als Industrieroboter mit einem Gelenkarm ausgebildet ist, der mehrere Freiheitsgrade aufweist und
wobei der Messkopf (10) an einem freien Ende des Manipulators angeordnet ist, so dass
der Messkopf (10) in wenigstens drei Raumachsen frei im Raum ausrichtbar ist, mit einem System zur Lageerkennung des Messkopfs (10) relativ zu dem Metallrohr (3), zum Positionieren des Messkopfs(10) relativ zu dem Metallrohr (3),
wobei der Messkopf (10) und die Steuereinrichtung der Werkzeugmaschine (2) einen geschlossenen Regelkreis bilden.

10. Gewindeschneidanlage nach Anspruch 9, **dadurch gekennzeichnet, dass** die Werkzeugmaschine (2) als Drehmaschine, Dreh-Fräs-Zentrum, Gewindeschneidmaschine oder Muffenschneidmaschine ausgebildet ist.

11. Gewindeschneidanlage nach Anspruch 9 oder 10, **dadurch gekennzeichnet, dass** die Werkzeugmaschine (2) wenigstens ein drehbares Spannfutter zur Einspannung des Metallrohres (3) sowie wenigstens einen relativ zu dem Spannfutter festlegbaren und positionierbaren Werkzeughalter mit wenigstens einem Werkzeug aufweist.

12. Gewindeschneidanlage nach einem der Ansprüche 9 bis 11,
**gekennzeichnet durch** eine Bearbeitungsstation und eine Vermessungsstation (7), die in einer Prozesslinie hintereinander angeordnet sind, wobei die Bearbeitungsstation die Werkzeugmaschine (2) und die Vermessungsstation (7) wenigstens eine Einrichtung zur optischen Vermessung der geschnittenen Gewinde umfasst.

13. Gewindeschneidanlage nach einem der Ansprüche 9 bis 12, **dadurch gekennzeichnet, dass** der Messkopf (10) Mittel zur Reinigung des zu vermessenden Gewindes umfasst.

14. Gewindeschneidanlage nach Anspruch 13, **dadurch gekennzeichnet, dass** als Mittel zur Reinigung des zu vermessenden Gewindes wenigstens eine mechanisch und/oder mit einem Reinigungsfluid wirkende Reinigungsvorrichtung vorgesehen ist.

## Claims

1. Method of producing a thread at at least one end of at least one metal pipe (3) by machining processing of the metal pipe (3) in at least one CNC-controlled machine tool (2), comprising an optical measurement of the thread during the thread-cutting process and/or subsequently to the thread-cutting process by means of at least one measuring head (10), which is guided at a manipulator, with at least one optical measuring path (16), as well as electronic detection and evaluation of the measurement data of the thread profile and/or a sealing lip (6) of the thread, wherein the method further comprises derivation of control commands for control of the machine tool (2) from the measurement data with use of at least one regulating device coupled with the machine tool (2), with a closed regulating loop between the processing of the metal pipe and the thread measurement, wherein a direct evaluation and derivation of control commands for the machine tool on which the thread is or was cut is carried out, wherein the control commands are generated from a difference between a target profile and an actual profile proved by measurement data, wherein the regulating device comprises at least one self-learning algorithm for derivation of the control commands, wherein the manipulator is configured as an industrial robot with a pivot arm having a plurality of degrees of freedom, and the measuring head (10) is arranged at a free end of the manipulator so that the measuring head (1) can be oriented freely in space in a least three spatial axes, further comprising the method steps of fixing the metal pipe (3), which is to be measured, in a defined measuring position within a measuring station, positioning the measuring head (10) relative to the metal pipe (3) by a system for positional recognition of the measuring head (10), orienting the at least one measuring path (16) with respect to a pipe axis and traversing the thread profile and/or the sealing lip (6) of the metal pipe (3).

2. Method according to claim 1, **characterised in that** a conical external thread (4) which is to form a pressure-resistant gastight and/or liquid-tight connection with a complementary internal thread of a further metal pipe (3) is cut as thread.

3. Method according to one of claims 1 and 2, **characterised in that** the measuring head (10) is arranged for measuring a conical thread with undercut thread flanks (5).

4. Method according to any one of claims 1 to 3, **characterised in that** the optical measurement of the thread is carried out subsequently to the thread-cutting process, preferably in a production line, which is arranged for serial processing of a plurality of metal pipes (3), a plurality of cycles after the thread-cutting process.

5. Method according to any one of claims 1 to 4, **characterised in that** the control commands are selected from a group of control commands comprising a positional correction of at least one tool relative to the metal pipe, which is to be processed, in the case of false setting parameters or for wear compensation, exchange of at least one tool due to wear, selection of at least one tool due to predetermined geometric requirements of the thread profile, adjustment of the rotational speed and/or torque of a clamping chuck of the machine tool (2) and change of the cycle time of the machine tool (2).

6. Method according to any one of claims 1 to 5, **characterised in that** at least one method step comprises at least one calibration of the measuring head (10) by means of at least one reference component arranged in a measuring station (7).

7. Method according to any one of claims 1 to 6, **characterised in that** the thread to be cut is configured in software and the configuration data are compared with the measurement data.

8. Method according to any one of claims 1 to 7, **characterised in that** the measurement data are stored in a quality databank with a unique identifier and assignment of the respective metal pipe (3).

9. Thread-cutting installation for producing threads at the ends of metal pipes for carrying out the method according to any one of claims 1 to 8, comprising at least one CNC machine tool (2) for machining processing of the metal pipe (3) to be provided with the thread, a control device for realising control commands at the machine tool (2) as well as at least one device for optical measurement of the cut thread, means for electronic detection and storage of the measurement data of the thread measurement, and at least one regulating device for derivation of the control commands from the measurement data of the thread measurement, wherein the regulating device comprises at least one self-learning algorithm for derivation of the control commands and wherein the device for optical detection and storage of the measurement data is coupled with the control device of the machine tool (2), wherein at least one measuring head (10), which is guided at a manipulator, with at least one optical measuring path (16) is provided as device for optical measurement, the measuring head being mounted at the manipulator and equipped for the purpose of moving the measuring head (10) relative to the metal pipe (3) for the purpose of measuring the thread profile and/or a sealing lip (6) of the thread, wherein the manipulator is configured as an industrial robot with a pivot arm having a plurality of degrees of freedom, and wherein the measuring head (10) is arranged at a free end of the manipulator so that the measuring head (10) can be oriented freely in space in at least three spatial axes, with a system for positional recognition of the measuring head (10) relative to the metal pipe (3) for positioning the measuring head (1) relative to the metal pipe (3), wherein the measuring head (10) and the control device of the machine tool (2) form a closed regulating loop.

10. Thread-cutting installation according to claim 9, **characterised in that** the machine tool (2) is configured as a lathe, a turning-milling centre, a thread-cutting machine or a sleeve-cutting machine.

11. Thread-cutting installation according to claim 9 or 10, **characterised in that** the machine tool (2) comprises at least one rotatable clamping chuck for clamping the metal pipe (3) as well as at least one tool holder, which is fixable and positionable relative to the clamping chuck, with at least one tool.

12. Thread-cutting installation according to any one of claims 9 to 11, **characterised by** a processing station and a measuring station (7), which are arranged in succession in a processing line, wherein the processing station comprises the machine tool (2) and the measuring station (7) comprises at least one device for optical measurement of the cut thread.

13. Thread-cutting installation according to and one of claims 9 to 12, **characterised in that** the measuring head (10) comprises means for cleaning the thread to be measured.

14. Thread-cutting installation according to claim 13, **characterised in that** at least one cleaning device operating mechanically and/or with cleaning fluid is provided as means for cleaning the thread to be measured.

## Revendications

1. Procédé pour la fabrication d'un filetage à au moins une extrémité d'au moins un tube métallique (3) par usinage du tube métallique (3) dans au moins une machine-outil (2) à commande CNC, comprenant une mesure optique du filetage pendant l'opération de filetage et/ou à la suite de l'opération de filetage au moyen d'au moins une tête de mesure (10) guidée sur un manipulateur, dotée d'au moins une section de mesure optique (16), ainsi que la saisie et l'évaluation électroniques des données de mesure du profil de filetage et/ou d'une lèvre d'étanchéité (6) du filetage, le procédé comprenant en outre la déduction d'instructions de commande pour une commande de la machine-outil (2) à partir des données de mesure en utilisant au moins un dispositif de régulation couplé à la machine-outil (2), avec une boucle de régulation fermée entre l'usinage du tube métallique et la mesure du filetage, une évaluation et une déduction directes d'instructions de commande étant effectuées pour la machine-outil sur laquelle le filetage est ou a été taillé, les instructions de commande étant générées à partir d'un écart entre un profil de consigne et un profil réel attesté par des données de mesure, le dispositif de régulation comprenant au moins un algorithme auto-apprenant pour la déduction des instructions de commande, le manipulateur étant conçu comme un robot industriel à bras articulé qui présente plusieurs degrés de liberté et la tête de mesure (10) étant disposée à une extrémité libre du manipulateur, de sorte que la tête de mesure (10) peut être orientée librement dans l'espace selon au moins trois axes spatiaux, comprenant en outre les étapes de procédé consistant à fixer le tube métallique (3) à mesurer dans une position de mesure définie au sein d'un poste de mesure, positionner la tête de mesure (10) par rapport au tube métallique (3) avec un système de reconnaissance de la position de la tête de mesure (10), orienter l'au moins une section de mesure (16) par rapport à un axe du tube et balayer le profil de filetage et/ou la lèvre d'étanchéité (6) du tube métallique (3).

2. Procédé selon la revendication 1, **caractérisé en ce que,** en tant que filetage, est taillé un filetage extérieur conique (4) destiné à former, avec un filetage intérieur complémentaire d'un autre tube métallique (3), une liaison résistante à la pression, étanche aux gaz et/ou aux liquides.

3. Procédé selon l'une des revendications 1 ou 2, **caractérisé en ce que** la tête de mesure (10) est agencée pour la mesure de filetages coniques présentant des flancs de filet (5) en contre-dépouille.

4. Procédé selon l'une des revendications 1 à 3, **caractérisé en ce que** la mesure optique du filetage a lieu à la suite de l'opération de filetage, de préférence dans une ligne de production qui est agencée pour l'usinage en série d'une pluralité de tubes métalliques (3), plusieurs cycles après l'opération de filetage.

5. Procédé selon l'une des revendications 1 à 4, **caractérisé en ce que** les instructions de commande sont sélectionnées dans un groupe d'instructions de commande comprenant une correction de position d'au moins un outil par rapport au tube métallique à usiner en cas de paramètres de réglage erronés ou pour la compensation de l'usure, le changement, dû à l'usure, d'au moins un outil, la sélection d'au moins un outil en raison d'exigences géométriques prédéfinies pour le profil de filetage, le réglage de la vitesse de rotation et/ou du couple d'un mandrin de la machine-outil (2), la modification du temps de cycle de la machine-outil (2).

6. Procédé selon l'une des revendications 1 à 5, **caractérisé en ce qu'**au moins une étape du procédé comprend au moins un étalonnage de la tête de mesure (10) au moyen d'au moins un composant de référence disposé dans un poste de mesure (7).

7. Procédé selon l'une des revendications 1 à 6, **caractérisé en ce que** le filetage à tailler est configuré dans un logiciel et les données de configuration sont comparées aux données de mesure.

8. Procédé selon l'une des revendications 1 à 7, **caractérisé en ce que** les données de mesure sont stockées dans une base de données de qualité avec une identification et une affectation univoques du tube métallique (3) concerné.

9. Installation de filetage pour la fabrication de filetages aux extrémités de tubes métalliques, pour la mise en œuvre du procédé selon l'une des revendications 1 à 8, comprenant au moins une machine-outil (2) à commande CNC pour l'usinage du tube métallique (3) à pourvoir d'un filetage, un dispositif de commande pour la mise en œuvre d'instructions de commande sur la machine-outil (2) ainsi qu'au moins un dispositif pour la mesure optique du filetage taillé, des moyens pour la saisie et le stockage électroniques des données de mesure de la mesure de filetage, ainsi qu'au moins un dispositif de régulation pour la déduction des instructions de commande à partir des données de mesure de la mesure de filetage, le dispositif de régulation comprenant au moins un algorithme auto-apprenant pour la déduction des instructions de commande, et le dispositif pour la saisie et le stockage optiques des données de mesure étant couplé au dispositif de commande de la machine-outil (2), au moins une tête de mesure (10) guidée sur un manipulateur et dotée d'au moins une section de mesure optique (16) étant prévue en tant que dispositif de mesure optique, laquelle est montée sur le manipulateur et est agencée pour déplacer la tête de mesure (10) par rapport au tube métallique (3) en vue de la mesure du profil de filetage et/ou d'une lèvre d'étanchéité (6) du filetage, le manipulateur étant conçu comme un robot industriel à bras articulé qui présente plusieurs degrés de liberté et la tête de mesure (10) étant disposée à une extrémité libre du manipulateur, de sorte que la tête de mesure (10) peut être orientée librement dans l'espace selon au moins trois axes spatiaux, avec un système de reconnaissance de la position de la tête de mesure (10) par rapport au tube métallique (3), pour positionner la tête de mesure (10) par rapport au tube métallique (3), la tête de mesure (10) et le dispositif de commande de la machine-outil (2) formant une boucle de régulation fermée.

10. Installation de filetage selon la revendication 9, **caractérisée en ce que** la machine-outil (2) est conçue comme un tour, un centre de tournage-fraisage, une machine à fileter ou une machine à couper les manchons.

11. Installation de filetage selon la revendication 9 ou 10, **caractérisée en ce que** la machine-outil (2) comporte au moins un mandrin rotatif pour le serrage du tube métallique (3) ainsi qu'au moins un porte-outil, pouvant être fixé et positionné par rapport au mandrin, doté d'au moins un outil.

12. Installation de filetage selon l'une des revendications 9 à 11, **caractérisée par** un poste d'usinage et un poste de mesure (7) qui sont disposés l'un après l'autre dans une ligne de traitement, le poste d'usinage comprenant la machine-outil (2) et le poste de mesure (7) comprenant au moins un dispositif pour la mesure optique des filetages taillés.

13. Installation de filetage selon l'une des revendications 9 à 12, **caractérisée en ce que** la tête de mesure (10) comprend des moyens pour le nettoyage du filetage à mesurer.

14. Installation de filetage selon la revendication 13, **caractérisée en ce qu'**il est prévu, en tant que moyen de nettoyage du filetage à mesurer, au moins un dispositif de nettoyage agissant mécaniquement et/ou avec un fluide de nettoyage.
